# EUROPÄISCHE PATENTSCHRIFT

(11) **EP 3 238 987 B1**
(45) Veröffentlichungstag und Bekanntmachung des Hinweises auf die Patenterteilung: **25.03.2020**
(21) Anmeldenummer: 17167686.9
(22) Anmeldetag: 24.04.2017
(51) Int. Cl.: B60R 22/18, B60N 2/68, B60N 2/01, B60N 2/42, B60N 2/427, B60R 22/28, B60N 2/24

(54) **VORRICHTUNG ZUR ANORDNUNG EINES PERSONENRÜCKHALTESYSTEMS IN EINEM VERKEHRSMITTEL, PERSONENSITZANORDNUNG UND VERKEHRSMITTEL**
DEVICE FOR ARRANGING A PASSENGER RETENTION SYSTEM IN A MEANS OF TRANSPORT, PASSENGER SEAT ASSEMBLY AND MEANS OF TRANSPORT
DISPOSITIF D'AGENCEMENT D'UN SYSTÈME DE RETENUE DE PERSONNE DANS UN MOYEN DE TRANSPORT, AGENCEMENT DE SIÈGE DE PERSONNE ET MOYEN DE TRANSPORT

(30) Priorität: 25.04.2016 DE 102016107639; 22.09.2016 DE 102016117898
(43) Veröffentlichungstag der Anmeldung: 01.11.2017
(73) Patentinhaber: AGUTI PRODUKTENTWICKLUNG & DESIGN GMBH, 88085 Langenargen (DE)
(72) Erfinder: Grieger, Andreas, 88079 Kressbronn (DE)
(74) Vertreter: Otten, Roth, Dobler & Partner mbB Patentanwälte

(56) Entgegenhaltungen:
- WO-A1-99/47379
- WO-A1-2006/005965
- DE-A1-102008 006 549
- DE-A1-102014 003 966
- DE-C1- 3 706 394
- DE-U1- 9 320 333

## Beschreibung

### Stand der Technik

Vorrichtungen zur Anbringung eines Personenrückhaltesystems in einem Verkehrsmittel sind bekannt, beispielsweise zur Anbringung einer Sicherheitsgurtanordnung zur Personensicherung und von Komponenten eines dazugehörigen Personensitzes im Verkehrsmittel.

In Verkehrsmitteln wie Fahrzeugen beispielsweise Personenkraftwagen, Kleinbussen, Wohnmobilen oder Camping-Mobilen werden solche Vorrichtungen als eine Baueinheit für einen nach der Herstellung des Fahrzeugs nachträglichen Einbau im Fahrzeuginneren bereitgestellt. Die Vorrichtung mit dem daran vorhandenen Personenrückhaltesystem muss für im Fahrzeug auftretende maximale Belastungssituationen ausgelegt sein, die insbesondere im Zusammenhang mit Unfallszenarien im Straßenverkehr auftreten können.

Bei der Auslegung der Vorrichtung sind insbesondere Sicherheits- bzw. Stabilitätskriterien zu erfüllen, welche zum Beispiel für eine Zulassung der Vorrichtung bzw. des Fahrzeugs erforderlich sind. Die kostengünstige und wirtschaftlich vorteilhafte Ausbildung bzw. Herstellung der Vorrichtung stellt dabei eine besondere Herausforderung dar.

Die DE 10 2014 003 966 A1 betrifft eine Vorrichtung zur Anordnung eines Personenrückhaltesystems zur Sicherung von Personen in einem Verkehrsmittel.

### Aufgabe und Vorteile der Erfindung

Aufgabe der vorliegenden Erfindung ist es, eine Vorrichtung der einleitend beschriebenen Art bzw. eine Personensitzanordnung für ein Verkehrsmittel technisch und wirtschaftlich vorteilhaft bereitzustellen. Insbesondere sollen Stabilitätskriterien sicher und herstellungstechnisch vorteilhaft erfüllbar sein.

Diese Aufgabe wird durch den unabhängigen Anspruch 1 gelöst. Die abhängigen Ansprüche betreffen vorteilhafte und zweckmäßige Weiterbildungen der Erfindung.

Die Erfindung geht aus von einer Vorrichtung zur Anordnung eines Personenrückhaltesystems in einem Verkehrsmittel, um mit dem Personenrückhaltesystem eine in dem Verkehrsmittel sitzende Person zu sichern, wobei die Vorrichtung eine Stützanordnung mit einer Vertikalstütze umfasst, die in einem Bodenbereich des Verkehrsmittels aufrecht stehend fixierbar ist, und wobei an der Vertikalstütze eine längliche Querstrebe aufgenommen ist, die winklig zur Vertikalstütze ausgerichtet ist.

Eine solche Vorrichtung ist insbesondere als Einbauvorrichtung in der Art eines rahmenartigen Gestells ausgebildet, umfassend Freilassungen, die von parallel und winklig zueinander ausgerichteten, miteinander verbundenen länglichen Profilen umrahmt sind. Die Profile bestehen vorzugsweise aus einem metallischen Material.

Die Vorrichtung zur Anordnung des Personenrückhaltesystems in dem Verkehrsmittel ist vorzugsweise derart ausgelegt und ausgebildet, in dem Verkehrsmittel beziehungsweise in einem Kraftfahrzeug an einem Bodenabschnitt des Verkehrsmittel befestigt zu werden. Bevorzugt so, dass die Befestigung der Vorrichtung allein an dem Bodenabschnitt beispielsweise an einer Bodenplatte im Verkehrsmittel lösbar oder unlösbar fixierbar ist zum Beispiel anschraubbar oder verschweißbar.

Die erfindungsgemäße Vorrichtung ist vorzugsweise als Basisgestell beziehungsweise als Gurt- und Sitzgestell ausgebildet, insbesondere in der Art einer Grundstruktur für eine Sitzanordnung im Verkehrsmittel beziehungsweise für eine Fahrzeugsitzanordnung.

An der im Fahrzeug eingebauten Vorrichtung sind vorzugsweise Komponenten des Personenrückhaltesystems beziehungsweise der Sicherheitsgurtanordnung und des Sitzes anbringbar. Derartige Komponenten umfassen zum Beispiel einen an einem ersten Ende eines Sicherheitsgurts angreifenden Gurtaufroller, eine Gurtumlenkanordnung zur Richtungsänderung des daran vorbeigeführten Gurts, eine Fixierung für ein zweites Gurtende und ein Gurtschloss, an dem eine Einsteckteil, mit welchem der Gurt als Schlaufe ausziehbar ist, lösbar einrastbar ist. Als Sicherheitsgurtanordnungen kommen insbesondere Zweipunkt- oder andere Mehrpunkt-Gurtsysteme beispielsweise Dreipunkt-Gurtsysteme in Frage.

Die vorgeschlagene Vorrichtung muss konstruktiv bzw. mechanisch ausgelegt sein, um maximal tolerierbare bzw. mögliche Belastungen insbesondere bei dynamischen Belastungsvorgängen einen ausreichenden Widerstand entgegensetzen zu können, also entsprechende Kräfte und Momente aufnehmen und weitergeben zu können.

Dies ist Voraussetzung zur Erhaltung der Sicherheit einer Person, welche mit einer Sicherheitsgurtanordnung sicherbar ist, wobei die Sicherheitsgurtanordnung an der im Verkehrsmittel fixierten Vorrichtung aufgenommenen ist, samt Komponenten eines entsprechenden Personensitzes. Die Vorrichtung ist demgemäß vorzugsweise so ausgestaltet, eine innere Gerüststruktur eines fest in einem Verkehrsmittel installierten Personensitzes zu bilden.

Für eine vergleichsweise höhere Stabilität der Vorrichtung, z. B. für eine erweiterte Einsatzmöglichkeit auf einen Personensitz mit zwei oder mehr Sitzplätzen, kann die Vorrichtung zum Beispiel genau zwei parallele Vertikalstützen umfassen, die vorzugsweise identisch aufgebaut sind. Beide Vertikalstützen sind bevorzugt mit der einen Querstrebe verbunden. Die Vorrichtung kann ggf. auch zwei oder mehr vorzugsweise gleichartige Querstreben aufweisen, welche mit der einen oder mit den mehreren Vertikalstützen verbunden sind.

Bei zwei oder mehr Vertikalstützen sind die Vertikalstützen voneinander lateral beziehungsweise seitlich beziehungsweise horizontal voneinander beabstandet. Gegebenenfalls kann im Fußbereich der Vertikalstützen eine Verbindung der Vertikalstützen miteinander vorhanden sein, über welche die Fixierung am Bodenbereich des Verkehrsmittels einrichtbar ist.

Die Querstrebe ist vorzugsweise durchgehend und steht bevorzugt an der einen oder den mehreren Vertikalstützen horizontal bzw. seitlich über, beispielsweise beidseitig oder einseitig. Demgemäß ist die Querstrebe in der Regel länger als ein Aufstellmaß bzw. ein Abstand der beiden Vertikalstützen.

Bei einer typischen erfindungsgemäßen Vorrichtung mit zwei senkrecht im Verkehrsmittel aufstellbaren Vertikalstützen und einer horizontal gerichteten Querstrebe beträgt die Länge der Vertikalstützen bzw. die Höhe im montierten Zustand etwa 1,10 Meter bis ca. 1,30 Meter, wobei die Vertikalstützen über einen Abstand von z. B. ca. 30 bis 40 Zentimeter voneinander seitlich beabstandet sind. Eine Länge der Querstrebe liegt bevorzugt bei ca. 70 bis 90 Zentimeter.

Ein wesentlicher Aspekt der Erfindung liegt darin, dass die Vertikalstütze und/oder die Querstrebe als Mehrfach-Hohlprofilelement aufgebaut sind, wobei das Mehrfach-Hohlprofilelement über seine zumindest wesentliche Erstreckung zwei miteinander längsseitig verbundene Hohlkörper umfasst. Die Angabe von zwei Hohlkörpern ist so zu verstehen, dass das Mehrfach-Hohlprofileelement mindestens zwei Hohlkörper umfasst bzw. ein Mehrfach-Hohlprofilelement zwei, drei und mehr Hohlkörper umfassen kann, vorzugsweise untereinander identische Hohlkörper.

Die zwei oder mehr Hohlkörper pro Vertikalstütze oder Querstrebe erhöht die Stabilität der Vorrichtung auf vorteilhafte Weise. Insbesondere ist bezogen auf bekannte solche Vorrichtungen die höhere mechanische Stabilität möglich bei gleichen Abmessungen bzw. ohne dass die erfindungsgemäße Vorrichtung gegenüber bekannten Vorrichtungen größere Abmessungen bzw. Außenmaße der Vorrichtung bzw. der Vertikalstütze und/oder der Querstrebe aufweist.

Bei einer zu bekannten Vorrichtungen vergleichbaren Stabilität kann die erfindungsgemäße Vorrichtung gegebenenfalls mit geringeren Abmessungen der Vertikalstütze bzw. der Querstrebe und damit mit einem geringeren Materialeinsatz bzw. mit geringerem Gewicht bereitgestellt werden.

Ein wesentlicher Vorteil der Erfindung ist darin zu sehen, dass gegenüber bekannten Vorrichtungen bei der vorgeschlagenen Vorrichtung sich mit vergleichbarem oder gegebenenfalls nur geringfügig höherem Materialeinsatz signifikant höhere Stabilitätswerte realisieren lassen. Vorzugsweise weist das Mehrfach-Hohlprofil für die Vertikalstütze und/oder die Querstrebe konkret die gleichen oder zumindest nahezu gleichen Außenmaße auf wie die Außenmaße von bisher verwendeten Vertikalstützen bzw. Querstreben.

Typische Längen- und Breitenmaße bzw. Seitenmaße des rechteckigen oder quadratischen Querschnitts des Mehrfach-Hohlprofils beträgt ca. 30 bis 40 Millimeter. Eine Wanddicke jedes Hohlkörpers der zwei oder mehr Hohlkörper des Mehrfach-Hohlprofilelements liegt in der Regel im einstelligen Millimeterbereich.

Vorzugsweise ist das Mehrfach-Hohlprofil so ausgebildet, dass die Masse der aus dem gebildeten erfindungsgemäßen Vertikalstütze bzw. Querstrebe gleich oder nur vergleichsweise gering höher ist als die Masse bisheriger Vertikalstützen bzw. Querstreben bei Erfüllung der Vorgaben für den gleichen Einsatzzweck.

Für eine flexible Gestaltung der Vorrichtung kann wahlweise nur die eine oder die mehreren Vertikalstützen oder nur die eine oder die mehreren Querstreben aus dem Mehrfach-Hohlprofil gebildet sein.

Es kann auch sowohl die Vertikalstütze als auch die Querstrebe aus dem Mehrfach-Hohlprofil bestehen.

Vorzugsweise umfasst die erfindungsgemäße Vorrichtung genau zwei parallele Vertikalstützen und genau eine Querstrebe, wobei beide Vertikalstützen und die Querstrebe aus einem Mehrfach-Hohlprofil gebildet sind. Vorzugsweise bestehen beide Vertikalstützen und die Querstrebe aus jeweils einem Doppel-Hohlprofilelement, vorzugsweise alle drei Elemente aus einem identisch aufgebauten Mehrfach-Hohlprofil bzw. aus einem identisch aufgebauten Doppel-Hohlprofil. Lediglich in der Länge, der Verbindungsart an weiteren Elementen der Vorrichtung und/oder durch nach der Herstellung der Vertikalstützen und der Querstrebe vorgenommene Anpassungen an den Vertikalstützen und der Querstrebe können sich die drei Mehrfach-Hohlprofilelemente gegebenenfalls geringfügig individuell unterscheiden.

Vorzugsweise bestehen die beiden Vertikalstützen und die Querstrebe aus einem Doppel-Hohlprofilelement, das aus zwei miteinander verbundenen Vierkant-Rechteck-Hohlprofilen gebildet ist. Der Außenquerschnitt des aus den beiden Vierkant-Rechteck-Hohlprofilen gebildeten Doppel-Hohlprofilelements ist vorzugsweise rechteckig oder quadratisch oder zumindest angenähert quadratisch. Die Länge des Rechteckquerschnitts des Vierkant-Rechteck-Hohlprofils macht z.B. vorzugsweise das Doppelte der Breite des Rechteckquerschnitts aus.

Beispielsweise sind vorzugsweise zwei identische Vierkant-Rechteck-Hohlprofile derart miteinander verbunden, dass eine Längs-Außenseite des einen Vierkant-Rechteck-Hohlprofils der Längs-Außenseite des anderen Vierkant-Rechteck-Hohlprofils zugewandt ist, und die Längs-Außenseiten aneinander anliegen können, wobei zur Bildung des Doppel-Hohlprofilelements die beiden Vierkant-Rechteck-Hohlprofile in dieser parallelen Ausrichtung zueinander miteinander verbunden sind. Die Verbindung der beiden Vierkant-Rechteck-Hohlprofile, wenn diese aus einem schweißbaren Material bestehen, kann vorzugsweise durch mehrere einzelne Schweißpunkte über die Länge des Doppel-Hohlprofilelements entlang der jeweiligen benachbarten Längskanten der beiden Vierkant-Rechteck-Hohlprofile realisiert sein oder durch eine längliche Schweißnaht. Auch ein Verlöten, Verkleben, Verschrauben oder Vernieten ist möglich.

Die gegenüber bisherigen Anordnungen mit der erfindungsgemäßen Vorrichtung bereitstellbare erhöhte Stabilität basiert insbesondere auf dem Konstruktionsmerkmal, dass das Mehrfach-Hohlprofilelement vorteilhaft derart an der Vorrichtung ausgerichtet werden kann, dass im eingebauten Zustand der Vorrichtung im Verkehrsmittel eine äußere Beanspruchung in einem Belastungsfall durch die Struktur des Mehrfach-Hohlprofilelements vorteilhaft aufgenommen werden kann.

Im Belastungsfall kommen in der Regel insbesondere Zugkräfte und Momente in einer vorgegebenen Richtung an der Vorrichtung zur Wirkung. Damit kann das Mehrfach-Hohlprofilelement der Vertikalstütze bzw. der Querstrebe so ausgerichtet werden, dass eine Mehrzahl von in Richtung der Belastung wirkende Versteifungsabschnitte des Mehrfach-Hohlprofilelements wirksam sind.

Die Versteifungsabschnitte werden im Wesentlichen durch die Wandungen des Mehrfach-Hohlprofilelements gebildet, deren Wandebene parallel zur Belastungsrichtung ausgerichtet ist.

Denn diese Wandungen in Richtung parallel zu einer zum Beispiel Zugbelastung auf das Mehrfach-Hohlprofilelement stellen einen vergleichsweise hohen mechanischen Widerstand gegen eine plastische Verformung oder einen Materialbruch bereit.

Im eingebauten Zustand der Vorrichtung in dem Verkehrsmittel entspricht die relevante Belastungsrichtung in der Regel einer Sitzrichtung der gesicherten Person bzw. der Fahrrichtung des Verkehrsmittels bzw. des Fahrzeugs. Bei einem Fahrzeug tritt eine maximale Belastung z. B. bei einem Aufprall des fahrenden Fahrzeugs gegen ein Hindernis auf. Aufgrund der abgebremsten bewegten Masse der im Fahrzeug sitzenden und gesicherten Person wird über die Sicherheitsgurte des Personenrückhaltesystems eine ruckartig wirkende Zugkraft bzw. ein daraus resultierendes Moment in der Belastungsrichtung bzw. in Fahrrichtung an der erfindungsgemäßen Vorrichtung wirksam und damit an den Mehrfach-Hohlprofilelementen der Vertikalstütze bzw. der Querstrebe wirksam.

Ein wesentlicher Anteil dieser Belastung wird vorteilhaft von den Wandungen der Mehrfach-Hohlprofilelemente aufgenommen, ohne dass diese sich wesentlich bzw. so dass diese sich in einem tolerierbaren Maß plastisch verformen. Das Mehrfach-Hohlprofilelement stellt hierfür vorteilhaft mehrere parallel ausgerichtete und damit gleichwirkende bzw. gemeinsam versteifend wirkende Wandabschnitte bereit. Bei einem Mehrfach-Hohlprofilelement aus zwei längsseitig verbundenen vierkantförmigen Hohlkörpern sind dies zwei im Inneren des Mehrfach-Hohlprofilelements vorhandene parallele Innenwandungen und zwei gegenüberliegende Außenseiten bildende Außenwandungen, die parallel zu den Innenwandungen ausgerichtet sind. Die insgesamt vier parallelen Innen- und Außenwandungen sind in Belastungsrichtung hoch versteifend wirksam.

Gegenüber zum Beispiel einem einfachen Vierkant-Hohlprofilelement ist mit einem erfindungsgemäßen Doppel-Hohlprofilelement daher eine deutliche Stabilitätssteigerung erreichbar bzw. sind vier anstelle von zwei parallelen Wandungen versteifend wirksam, bei vorzugsweise gleichen Außenabmessung des erfindungsgemäßen Doppel-Hohlprofilelements gegenüber einem einfachen Hohlprofilelement.

Vorzugsweise stimmt die Außenabmessung der mit einem Mehrfach-Hohlprofilelement gebildeten Vertikalstütze bzw. Querstrebe mit der Außenabmessung bekannter Vertikalstützen und Querstreben überein. Damit können auf bisher genutzte Vorrichtungen abgestimmte Komponenten des Personenrückhaltesystems bzw. der Personensitzanordnung vorteilhaft in unveränderter Form an der erfindungsgemäßen Vorrichtung wie bislang angebracht werden, so dass kein Zusatzaufwand nötig wird. Auch die Einbindung der erfindungsgemäßen Vorrichtung in dem Verkehrsmittel, zum Beispiel an Befestigungsstellen, die ggf. auf bisherige Vorrichtungen abgestimmt im Bodenbereich des Verkehrsmittels vorbereitet sind, kann bei der erfindungsgemäßen Vorrichtung wie bisher erfolgen.

Jeder Hohlkörper des Mehrfach-Hohlprofilelements weist vorzugsweise ein Hohlvolumen auf, das sich in Längsrichtung des Hohlkörpers, welche vorzugsweise mit der Längsrichtung des Mehrfach-Hohlprofils zusammenfällt, durchgehend beziehungsweise insbesondere nahezu komplett durchgehend erstreckt. Damit ergibt sich im Inneren des Mehrfach-Hohlprofilelements entsprechend der Anzahl der vorhandenen Hohlkörper eine Anzahl von in Längsrichtung des Mehrfach-Hohlprofilelements durchgehender Hohlvolumina. Die zwei oder mehr Hohlvolumina sind voneinander über doppelte Wandabschnitte getrennt voneinander.

Gegebenenfalls kann ein Mehrfach-Hohlprofil auch durch mehrfaches Umbiegen eines flachen Blechmaterials gebildet sein.

Die Hohlkörper eines Mehrfach-Hohlprofilelements sind vorzugsweise identisch untereinander.

Jeder Hohlkörper weist eine Hohlkörperwand auf, welche über die Länge des Hohlkörpers zum Hohlvolumen des Hohlkörpers vorzugsweise durchgehend umfänglich geschlossen ist, zum Beispiel als Rohr- bzw. Hohlprofil.

Das Mehrfach-Hohlprofilelement ist vorzugsweise ein Mehrkant-Rohr bzw. ein Mehrkant-Hohlkörper bzw. ein Hohlkörper mit geraden Wandungsabschnitten. Dabei ist unter einem Mehrfach-Hohlprofilelement zu verstehen, dass im Inneren des Mehrfach-Hohlprofilelements bzw. innerhalb des Hohlvolumens eine Wand, vorzugsweise eine zweilagige Wand bzw. Doppel-Wand vorhanden ist bzw. bei drei oder mehr Hohlkörpern zwei oder mehr doppelte bzw. benachbarte Wandabschnitte vorzugsweise durchgehend vorhanden sind. Eine erste Wand der doppelten Wand wird von einem Hohlkörper und die zweite Wand der doppelten Wand wird von dem anderen Hohlkörper gebildet.

Das Mehrfach-Hohlprofilelement kann alternativ auch ein Rohr mit rundem oder elliptischem oder einem anderen Querschnitt mit gebogen verlaufenden Abschnitten sein. Zwei Rohre sind dabei ihrer Länge nach miteinander zu dem Mehrfach-Hohlprofilelement verbunden zum Beispiel verschweißt.

Das Mehrfach-Hohlprofilelement der Vertikalstütze ist vorzugsweise aus genau zwei Hohlkörpern gebildet.

Auch das Mehrfach-Hohlprofilelement der Querstrebe ist vorzugsweise aus genau zwei Hohlkörpern gebildet.

Ein Mehrfach-Hohlprofilelement kann auch mehr als zwei vorzugsweise drei oder vier Hohlkörper umfassen, wobei zumindest jeweils zwei benachbarte Hohlkörper der Länge nach miteinander verbunden sind.

Es ist überdies vorteilhaft, dass das Mehrfach-Hohlprofilelement aus zumindest zwei gleichartigen Hohlkörpern zusammengebaut ist. Vorzugsweise sind die zwei Hohlkörper identisch. Damit kann der Herstellungsaufwand was die Bildung des Mehrfach-Hohlprofilelements angeht minimiert werden.

Vorteilhafterweise ist das Mehrfach-Hohlprofilelement aus genau zwei vorzugsweise identischen Hohlkörpern herstellbar. Dies ist im Hinblick auf eine wirtschaftliche Herstellung und eine hohe Stabilität eine bevorzugte Variante der Erfindung.

Eine weitere vorteilhafte Ausgestaltung der Erfindung zeichnet sich dadurch aus, dass der Hohlkörper erste gegenüberliegende Hohlkörperwandungen und zweite gegenüberliegende Hohlkörperwandungen aufweist. Vorzugsweise sind die ersten Hohlkörperwandungen und die zweiten Hohlkörperwandungen winklig zueinander ausgerichtet. Damit lassen sich die Mehrfach-Hohlprofilelemente mit den Hohlkörpern so ausgerichtet räumlich bereitstellen, dass die Ebenen der Hohlkörperwandungen zumindest angenähert in Richtung von entsprechenden unterschiedlichen Hauptbelastungsrichtungen verlaufen. Damit ist die Vorrichtung hoch mechanisch belastbar und gleichzeitig platz- und materialsparend bereitstellbar.

Die Hohlkörper sind vorzugsweise einstückig bzw. zwei aneinander anschließende Hohlkörperwandungen gehen über Randbereiche mit einem Umbiege-Abschnitt ineinander über.

Vorzugsweise sind zwei erste parallele und zwei zweite parallele gegenüberliegende Hohlkörperwandungen vorhanden, welche über ein materialfreies Hohlvolumen des Hohlkörpers voneinander beabstandet sind.

Falls gewünscht, kann zum Beispiel zu Dämmzwecken das Hohlvolumen eines Hohlkörpers mit einem Material ausgefüllt werden zum Beispiel mit einem Schaumstoff.

Gemäß einer vorteilhaften Variante der Erfindung ist die Vertikalstütze und/oder die Querstrebe in Längsrichtung betrachtet innerhalb eines Endabschnitts der Vertikalstütze und/oder der Querstrebe mit einer Materialausnehmung in einer Wand der Vertikalstütze und/oder der Querstrebe versehen vorzugsweise geschlitzt ausgebildet ist.

Vorzugsweise ist das Mehrfach-Hohlprofilelement in Längsrichtung des Mehrfach-Hohlprofilelements betrachtet innerhalb eines Endabschnitts des Mehrfach-Hohlprofilelements mit einer Materialausnehmung in einer Wand des Mehrfach-Hohlprofilelements versehen vorzugsweise geschlitzt ausgebildet.

Damit ist ein plastisches Verformungsverhalten der Vertikalstütze und/oder der Querstrebe bzw. des Mehrfach-Hohlprofilelements in einem Belastungsfall beeinflussbar.

Vorzugsweise erstreckt sich die Materialausnehmung an der betreffenden Stelle der Vertikalstütze über eine Vorderseite der Vertikalstütze und über zumindest einen an die Vorderseite anschließenden seitlichen Bereich der Vertikalstütze. Insbesondere erstreckt sich die Materialausnehmung vorzugsweise durchgehend auf der Vorderseite und auf zwei seitlich an die Vorderseite anschließende gegenüberliegende seitliche Bereiche der Vertikalstütze. Gegebenenfalls kann ein vergleichsweise schmaler Materialsteg die Materialausnehmung punktuell unterbrechen z. B. im Bereich des Abschnitts der Materialausnehmung, der auf der Vorderseite der Vertikalstütz vorhanden ist. Die Vorderseite ist bezogen auf einen Nutzzustand zu verstehen, z. B. wenn die Vorrichtung in dem Verkehrsmittel eingebaut ist. Ein mit der Vorrichtung bildbarer Personensitz weist demgemäß eine Sitzstruktur mit Sitzfläche auf, welche sich an der Vorderseite der Vorrichtung und dementsprechend an der Seite der Vorderseite der Vertikalstütze ausbildet.

Die Materialaussparung kann mehrere voneinander getrennte Bereiche umfassen zum Beispiel Schlitze. Vorzugsweise ist ein oberer Endabschnitt der einen oder der zwei oder mehr Vertikalstützen mit einer Materialausnehmung in einer Wand des Mehrfach-Hohlprofilelements versehen vorzugsweise geschlitzt ausgebildet. Besonders bevorzugt sind mehrere Schlitze in einem oberen Endabschnitt der Vertikalstützen vorhanden. Zusätzlich oder alternativ kann die Querstrebe in einem Endabschnitt oder vorzugsweise in beiden Endabschnitten mit einer Materialausnehmung in einer Wand des Mehrfach-Hohlprofilelements versehen sein vorzugsweise geschlitzt ausgebildet bzw. mit mehreren Schlitzen bzw. Aussparungen versehen sein.

Eine Materialaussparung in einer Wand des Mehrfach-Hohlprofilelements bedeutet, dass in einer Wand eines Hohlkörpers vorzugsweise in Wänden der mehreren Hohlkörper die Materialaussparung vorhanden ist. Vorzugsweise erstreckt sich die Materialaussparung auf beide Hohlkörper bzw. erstreckt sich ein Schlitz durch eine Vorderseiten des Mehrfach-Hohlprofilelements weiter nach hinten. Der Schlitz ist vorzugsweise in beiden Hohlkörpern ausgebildet insbesondere zusammenhängend über z. B. circa eine halbe Tiefe des Mehrfach-Hohlprofilelements.

Auch ist es von Vorteil, wenn das Mehrfach-Hohlprofilelement in Längsrichtung des Mehrfach-Hohlprofilelements betrachtet innerhalb eines Endabschnitts des Mehrfach-Hohlprofilelements geschlitzt ausgebildet ist, wobei der geschlitzte Endabschnitt des Mehrfach-Hohlprofilelements eine Länge zwischen 20 und 40 Prozent der Gesamtlänge des Mehrfach-Hohlprofilelements ausmacht.

Es ist auch vom Vorteil, dass das geschlitzte Mehrfach-Hohlprofilelement in einem Endabschnitt mehrere materialfreie Einschnitte aufweist. Die mehreren materialfreien Einschnitte sind vorzugsweise nicht miteinander verbunden. Damit kann gezielt und feinstufig eine gewünschte Verformung im Belastungsfall der Hohlprofilelemente vorgegeben werden.

Besonders bevorzugt weisen bei einer erfindungsgemäßen Vorrichtung mit genau zwei Vertikalstützen beide Vertikalstützen im jeweils oberen Endabschnitt, vorzugsweise innerhalb eines Viertels oder eines Drittels der Gesamtlänge der Vertikalstütze, mehrere in Längsrichtung der Vertikalstütze voneinander beabstandete bzw. voneinander getrennte Materialausnehmungen bzw. Schlitze auf. Vorzugsweise sind beide Vertikalstützen identisch mit Materialaussparungen versehen. Vorzugsweise sind in einer Vertikalstütze drei bis 8, bzw. genau 5, genau 6 oder genau 7 Materialaussparungen bzw. Schlitze ausgebildet. Die Schlitze spannen jeweils parallele voneinander beabstandete Ebenen auf, welche winklig zur Längsachse der Vertikalstütze vorzugsweise rechtwinklig zur Längsachse verlaufen.

Eine vorteilhafte Ausbildung der Erfindung ergibt sich in diesem Zusammenhang dadurch, dass das Mehrfach-Hohlprofilelement geschlitzt ist, womit in dem Mehrfach-Hohlprofilelement wenigstens ein materialfreier Einschnitt gebildet ist, der sich winklig zur Längserstreckung des Mehrfach-Hohlprofilelementes erstreckt.

Aufgrund der Materialausnehmungen bzw. der Schlitzung kann eine Person, welche mit dem an der Vorrichtung vorhandenen Personenrückhaltesystems gesichert ist, in einem Belastungsfall auf die Vorrichtung wie einem Aufprallunfall des Verkehrsmittels vor unerwünschten Verletzungen geschützt werden, indem die Grundhaltefunktion der Vorrichtung sicher erhalten bleibt bzw. die Vorrichtung nicht bricht oder ggf. sogar aus dem Bodenbereich des Verkehrsmittels herausgerissen wird. Denn mit den materialfreien Bereichen bzw. Schlitzen kann auf einfache Weise und systematisch beziehungsweise vorgebbar eine einzelne oder mehrere Soll-Verformungsstelle im Mehrfach-Hohlprofilelement ausgebildet werden. Damit wird im Belastungsfall zwangsweise eine tolerierbare Verformung der Hohlprofile erzwungen, so dass dabei Energie umgewandelt wird und somit keine Energiespitze auftritt, die zum plötzlichen Versagen bzw. Brechen der Vorrichtung führt bzw. es ausgeschlossen ist, dass die Vorrichtung aus dem Bodenbereich des Fahrzeugs herausgerissen wird. Denn an den materialfreien Bereichen bzw. Schlitzen kommt es zu einer plastischen Verformung im geschlitzten Bereich des Mehrfach-Hohlprofilelements, womit ausgeschlossen ist, dass der betreffende Bauteilabschnitt bricht. Damit findet eine Energieumwandlung in einem Belastungsfall wie einem Aufprallunfall des Verkehrsmittels in kontrollierter Weise statt, wobei die Verformung in einem vorgebbaren bzw. tolerierbaren Maß gehalten wird. Die Vorgabe ist abhängig von der Art bzw. Anzahl der materialfreien Bereiche bzw. Schlitze.

Die Schlitzrichtung liegt vorzugsweise entlang einer Ebene quer oder schräg zur Längsrichtung des Mehrfach-Hohlprofilelements. Vorzugsweise wird die Schlitzung im Zustand der beiden miteinander längsseitig verbundenen Hohlkörper nachträglich spanabhebend im Mehrfach-Hohlprofilelement eingebracht, beispielsweise durch Fräsen oder Sägen.

Es ist über dies vorteilhaft, dass eine Abmessung eines durch die Schlitzung Mehrfach-Hohlprofilelement gebildeten materialfreien Bereichs vorgebbar abgestimmt ist auf ein Verformungsverhalten des Mehrfach-Hohlprofilelementes bei einer mechanischen Belastung. Damit kann das Mehrfach-Hohlprofilelement gezielt auf eine im Praxisfall zu erwartende Belastung abgestimmt ausgebildet werden.

Überdies ist es vorteilhaft, wenn eine Abmessung des durch die Schlitzung im Mehrfach-Hohlprofilelement gebildeten materialfreien Bereichs eine Länge, eine Breite und/oder eine Tiefe des materialfreien Bereichs ist.

Eine alternative bevorzugte Ausbildung der Erfindung zeichnet sich dadurch aus, dass ein Abstand zwischen zwei durch jeweils einen Schlitz im Mehrfach-Hohlprofilelement gebildeten materialfreien Bereichs vorgebbar abgestimmt auf ein Verformungsverhalten des Mehrfach-Hohlprofilelementes bei einer mechanischen Belastung. Ein Abstand zwischen zwei Schlitzen liegt vorzugsweise zwischen 10 und 60 Millimeter.

Schließlich ist es vorteilhaft, dass eine Auslegerstütze vorhanden ist, welche mit der Vertikalstütze und/oder der Querstrebe verbunden ist und ein Fußabschnitt der Auslegerstütze im Bodenbereich des Verkehrsmittels abstützbar ist, wobei die Auslegerstütze ein Mehrfach-Hohlprofilelement umfasst, welches zwei längsseitig verbundene Hohlkörper umfasst, vorzugsweise gemäß dem Mehrfach-Hohlprofilelement der Vertikalstütze und/oder der Querstrebe ausgebildet ist.

Die Erfindung betrifft außerdem eine Personensitzanordnung für ein Verkehrsmittel mit einer Vorrichtung gemäß einer der oben beschriebenen Ausbildungsform.

Des Weiteren erstreckt sich die Erfindung auf ein Verkehrsmittel mit einer Personensitzanordnung bzw. mit einer Vorrichtung in einer der oben diskutierten Ausgestaltungen.

### Figurenbeschreibung

Weitere Merkmale und Vorteile der Erfindung sind anhand schematisiert dargestellter Ausführungsbeispiele der Erfindung näher erläutert.

Im Einzelnen zeigt:
- Figur 1: eine perspektivische Ansicht schräg von oben einer erfindungsgemäßen Vorrichtung in einer ersten Ausführungsform,
- Figur 2: die Vorrichtung gemäß Figur 1 von vorne,
- Figur 3: eine perspektivische Ansicht schräg von vorne einer alternativen Ausführungsform einer erfindungsgemäßen Vorrichtung,
- Figur 4: die Vorrichtung gemäß Figur 3 von der Seite,
- Figur 5: einen Schnitt durch die Vorrichtung aus Figur 4 gemäß der Linie A-A in Figur 4 vergrößert dargestellt,
- Figur 6: einen Teil eines Ausschnitts aus Figur 5 und
- Figur 7: einen Ausschnitt durch ein alternatives Mehrfach-Hohlprofilelement einer erfindungsgemäßen Vorrichtung.

In den Figuren sind für sich entsprechende Teile unterschiedlicher Ausführungsformen teilweise die gleichen Bezugszeichen verwendet.

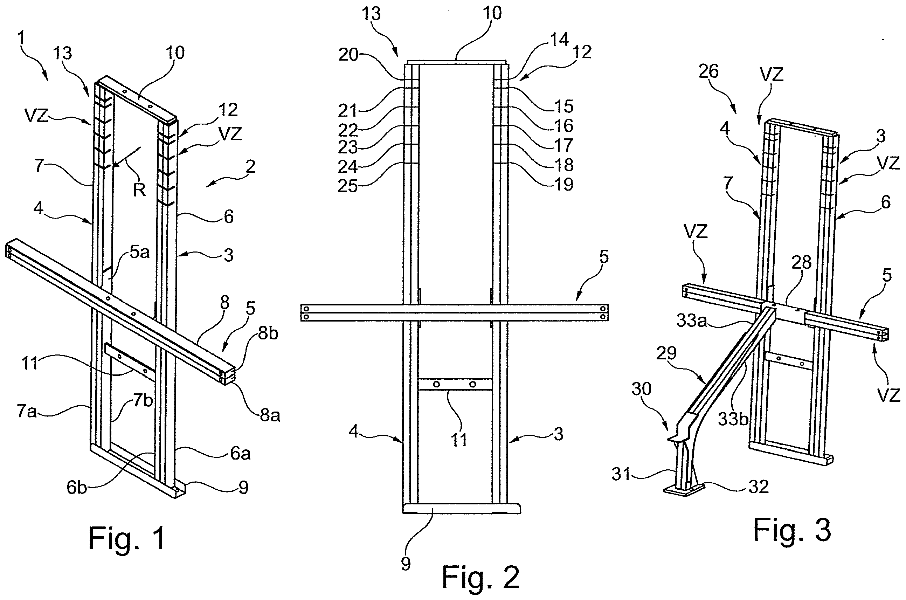

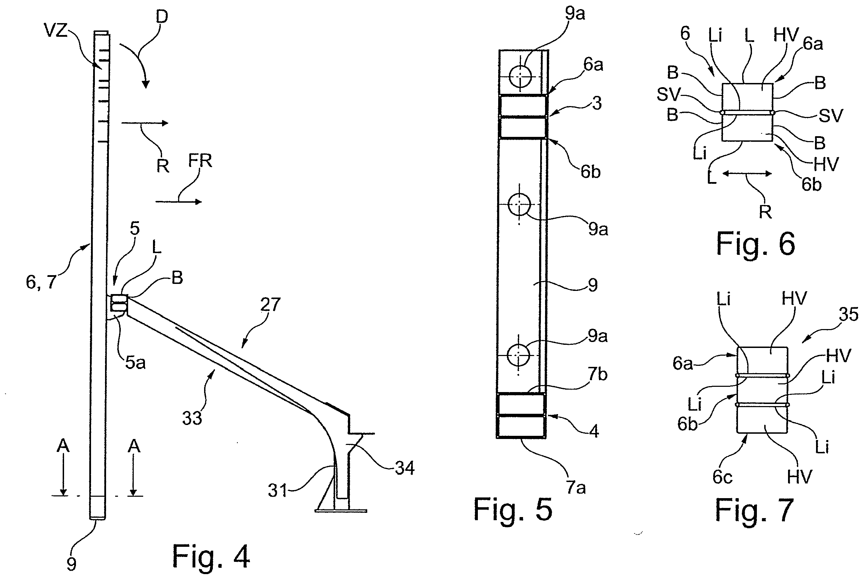

Figur 1 zeigt eine erfindungsgemäße Vorrichtung zur Anordnung eines Personenrückhaltesystems in einem Verkehrsmittel. Die Vorrichtung ist beispielhaft als Gestell für die Anbringung eines Personen-Sicherheitsgurtsystems bzw. als Gurtgestell 1 ausgebildet. Ein alternatives Gurtgestell 26 zeigen die Figuren 3 und 4. Am Gurtgestell 1, 26 lassen sich Komponenten eines Einfach- oder vorzugsweise Doppel-Fahrzeugsitzes befestigen, wie Rücken- und Armlehnen, Sitzpolster oder Sitz-Verstellmittel. Das Gurtgestellt 1, 26 ist geeignet, in einem Inneren des Verkehrsmittels wie einem Personenkraftfahrzeug zum Beispiel in einem Innenraum eines Kleinbusses oder eines Wohnmobils eingebaut zu werden, was vorzugsweise oberhalb bzw. an einem Bodenbereich im Verkehrsmittel erfolgt.

Das Gurtgestell 1, 26 ist bevorzugt in der Art einer Fachwerkstruktur ausgestaltet und umfasst eine Stützanordnung 2 mit einer Vertikalstütze oder hier beispielhaft zwei Vertikalstützen 3 und 4, die sich im Einbauzustand im Verkehrsmittel in senkrechter Ausrichtung befinden, sowie eine Querstrebe 5. Die Querstrebe 5 ist mit der Stützanordnung 2 verbunden, vorzugsweise in etwa einer halben vertikalen Höhe der Stützanordnung 2.

Die erste Vertikalstütze 3, die zweite Vertikalstütze 4 und die Querstrebe 5 sind erfindungsgemäß als Mehrfach-Hohlprofilelement 6, 7 und 8 aufgebaut, die im dargestellten Ausführungsbeispiel des Gurtgestells 1 jeweils gleichartig ausgebildet sind, hier vorzugsweise als Doppel- bzw. Zweifach-oder Zwillings-Hohlprofil.

Das Hohlprofilelement 6 umfasst rohrförmige Hohlkörper 6a, 6b, das Hohlprofilelement 7 umfasst die Hohlkörper 7a, 7b und das Hohlprofilelement 8 umfasst rohrförmige Hohlkörper 8a, 8b.

Die Ausbildung der Hohlprofilelemente 6 bis 8 ist anhand des Hohlprofilelements 6 nachfolgend konkret erläutert (siehe auch Figur 6).

Die jeweiligen Hohlkörper 6a und 6b des Hohlprofilelements 6 sind untereinander vorzugsweise identisch, hier jeweils als Hohlprofilelement 6 mit rechteckigem Querschnitt gebildet, wobei ein über die Länge des jeweiligen Hohlkörpers 6a und 6b sich erstreckendes Innen- bzw. Hohlvolumen HV von den Außenwänden des jeweiligen Hohlkörpers 6a, 6b umschlossen ist.

Die entlang von Hohlkörper-Längskanten verbundenen Außenwände des jeweiligen Hohlkörpers 6a, 6b umfassen zwei zueinander parallele gegenüberliegende streifenförmige Längsseiten Li, L und dazu rechtwinklig ausgerichtet zwei zueinander parallele gegenüberliegende streifenförmige kürzere Breitseiten B. Der Hohlkörper 6a mit seiner Längsseite Li verbunden mit der Längsseite Li des Hohlkörpers 6b.

Die miteinander verbundenen flachen vorzugsweise ebenen Längsseiten Li der beiden Hohlkörper 6a, 6b sind im verbundenen Zustand in gegenseitiger flächiger Anlage oder geringfügig über einen Spalt mit geringer Spaltbreite von z. B. bis ca. einem Millimeter beabstandet voneinander. Die Verbindung der beiden Hohlkörper 6a, 6b bzw. deren einander zugewandten Längsseiten Li kann lösbar zum Beispiel durch eine Schraubverbindung oder nicht lösbar zum Beispiel durch Vernieten oder stoffschlüssig durch Verschweißen mit einer Schweißverbindung SV (s. Fig. 6), Verlöten oder Verkleben erfolgen.

Um ein Mehrfach-Hohlprofilelement zu bilden, kann das Hohlprofilelement 6 alternativ auch anders gebildet sein, zum Beispiel aus einem Materialstück hergestellt sein, wie z. B. einem ursprünglich ebenen Materialsteifen bzw. Blechstreifen, der mehrfach umgebogenen ist, so dass sich eine hohle Grundstruktur des Hohlprofilelements 6 mit z. B. zwei jeweils für sich umrandeten Hohlvolumina HV ergibt. Wesentlich für die erfindungsgemäße Vorrichtung ist dabei, dass mindestens zwei im Inneren des Hohlprofilelements 6 vorhandene nebeneinander liegende Längsseiten Li ausgebildet sind, vorzugsweise paarweise miteinander verbunden. Die wenigstens zwei inneren Längsseiten Li sind vorzugsweise zumindest über die wesentliche Länge des Hohlprofilelements 6 ausgestaltet.

Wenn ein alternatives erfindungsgemäßes Mehrfach Hohlprofilelement 35 gemäß Figur 7 zum Beispiel ausgehend von dem Hohlprofilelement 6 gemäß Figur 6 anstatt aus zwei aus zum Beispiel drei gleichen Hohlkörpern 6a, 6b, 6c besteht, die jeweils mit Längsseiten Li verbunden sind, dann weist das alternative Mehrfach-Hohlprofilelement 35 vier innere Längsseiten Li auf, die zwei jeweils paarweise verbundene innere Längsseiten Li bilden. Im Inneren des alternativen Mehrfach-Hohlprofilelements 35 sind dann drei getrennte Hohlvolumina HV vorhanden.

Die inneren Längsseiten Li zusammen mit den äußeren Längsseiten L stellen bei einer Belastung auf das Gurtgestell 1 bzw. 26 in den Belastungsrichtungen R, die quer auf das Gurtgestell 1 und damit die Vertikalstützen 3 und 4 wirken, eine vergleichsweise hohe mechanische Stabilität bzw. eine hohe Versteifungswirkung bereit. Eine Belastung in Belastungsrichtung R ist insbesondere durch ein Brems- oder Aufprallereignis gegeben, wenn eine Person in einem am Gurtgestell 1 angebrachten Fahrzeugsitz sitzt und mit einem am Gurtgestell1 befestigten Sicherheitsgurtsystem gesichert ist. Dabei werden Zug-und/oder Druckkräfte oder Momente am Gurtgestell wirksam, insbesondere in Belastungsrichtung R. Die entsprechenden Kräfte werden aufgrund der sich in Fahrtrichtung FR des Verkehrsmittels sich ruckartig bewegenden und abgebremsten Masse der gesicherten Person über das Sicherheitsgurtsystem in das Gurtgestell 1 eingeleitet.

Die Vertikalstützen 3, 4 mit den dem Mehrfach-Hohlprofilelement 6 oder eine Vertikalstütze mit dem Mehrfach-Hohlprofilelement 35 sind vorzugsweise so ausgerichtet, dass die von den Längsseiten L bzw. Li aufgespannte Ebenen quer zur Horizontalen und parallel zur Belastungsrichtung R ausgerichtet sind. Die Ebenen der Breitseiten B entsprechend quer zu den Ebenen der Längsseiten L.

Die Querstrebe 5 ist mit den Ebenen ihrer Längsseiten des Mehrfach-Hohlprofilelements 8 vorzugsweise parallel zur Horizontalen ausgerichtet.

Die beiden parallel in Längsrichtung senkrecht stehenden Vertikalstützen 3 und 4 stehen mit ihrem unteren Ende auf einem nach oben offenen U-förmigen Fußelement 9, welches unterseitig an einem Bodenbereich beispielsweise einem Fahrzeugboden aufliegend fixierbar ist. Die unteren Enden der beiden Vertikalstützen 3 und 4 sind beispielsweise an dem Fußelement 9 angeschraubt oder angeschweißt.

Zwischen den oberen Enden der Vertikalstützen 3 und 4 ist ein streifenförmiges flaches Verbindungsblech 10 vorgesehen, das jeweils endseitig an den Enden der Vertikalstützen 3 und 4 befestigt ist. Die Vertikalstützen 3, 4 mit dem Fußelement 9 und dem Verbindungsblech 10 bildet eine Rahmenstruktur mit einer Umrahmung, die eine zur Belastungsrichtung R senkrecht stehende materialfreie Rahmenebene geschlossen umrahmt. Im unteren Drittel der Höhe der Vertikalstützen 3 und 4 ist außerdem eine Strebe 11 innen zwischen gegenüberliegenden Längsseiten L der beiden Vertikalstützen 3 und 4 fest angebracht vorhanden.

Die Querstrebe 5 ist als Mehrfach-Hohlprofilelement 8 bzw. Doppel-Hohlprofil gestaltet und in ihrer Längserstreckung winklig bzw. senkrecht zur Längserstreckung der Vertikalstützen 3 und 4 horizontal ausgerichtet. Die beiden Hohlprofile 8a und 8b sind jeweils mit rechteckiger Grundform, vorzugsweise identisch mit den Hohlprofilen 6a, 6b bzw. 7a, 7b. Die Ebenen der Längsseiten L sind horizontal ausgerichtet.

Die Querstrebe 5 ist rückwärtig mit einem Befestigungsabschnitt 5a versehen zur Verbindung an den beiden Vertikalstützen 3 und 4.

Das Gurtgestell 1 bzw. 26 ist vorzugsweise aus einem hochfesten zum Beispiel metallischen Werkstoff beispielsweise aus einem Stahlmaterial gebildet.

Für eine gezielte Verformung unter Belastung in einem Belastungsfall insbesondere durch eine Zugbelastung in Belastungsrichtung R sind Sollbiegestellen bzw. Verformungszonen VZ am Gurtgestell 1, 26 vorzugsweise in den Vertikalstützen 3, 4 und der Querstrebe 5 vorgesehen. Die Verformungszonen sind beispielsweise durch Materialwandschwächungen und/oder durch materialfreie Aussparungen wie Löcher oder Schlitze in den Wandungen der Vertikalstützen 3, 4 und/oder der Querstrebe 5 ausbildbar. In den Figuren sind in den Verformungszonen VZ der Querstrebe 5 keine Materialeinschnitte oder dergleichen ausgeführt.

Bei den Gurtgestellen 1 und 26 ist beispielhaft im oberen Drittel der Länge der Vertikalstützen 3 und 4 jeweils eine Schlitzung 12 bzw. 13 mit einer Mehrzahl von Schlitzen vorgesehen. Die Schlitzungen 12 bzw. 13 sind gleichartig ausgebildet. Die Schlitzung 12 umfasst vom oberen Ende der Vertikalstütze 3 aus betrachtet zum Beispiel die Schlitze 14 bis 19. Jeder Schlitz 14 bis 19 bildet einen materialfreien Bereich bzw. Spalt in der Vertikalstütze 3. Die der Schlitzung 12 entsprechende Schlitzung 13 in der Vertikalstütze 4 umfasst beispielsweise die Schlitze 20 bis 25.

Die Schlitze 14 bis 25 können zueinander unterschiedlich gestaltet sein oder gleichartig bzw. identisch. Die am Gurtgestell 1 und 26 gezeigten Schlitze 14 bis 25 sind identisch was insbesondere eine Schlitzbreite, eine Schlitztiefe von der vorderen offenen Seite nach hinten und was die Längsposition entlang der Vertikalstützen 3 und 4 angeht.

Eine Spaltbreite der Schlitze 14 bis 25 liegt beispielsweise im Bereich von Millimetern zum Beispiel zwischen 1 und 2 mm. Die Schlitze 14 bis 25 erstrecken sich hier beispielhaft von einer Vorderseite der Vertikalstützen 3 und 4 senkrecht zur Längserstreckung der Vertikalstützen 3 und 4 nach hinten über beispielsweise etwa eine halbe Tiefe der Vertikalstützen 3 und 4.

Sämtliche Schlitze 14 bis 25 sind gerade Schlitze und senkrecht beziehungsweise quer zur Längsachse der Vertikalstützen 3 und 4 ausgebildet, wobei einzelne oder sämtliche Schlitze auch einen nicht geradlinigen bzw. gebogenen Verlauf aufweisen und/oder schräg zur Längsachse der Vertikalstützen 3 und 4 gerichtet sein können.

Wird bei einem Belastungsfall auf das Gurtgestell 1, 26 in Belastungsrichtung R eine Zugkraft an den Vertikalstützen 3, 4 wirksam, können die jeweiligen geschlitzten oberen Endabschnitte der Vertikalstützen 3, 4 definiert bzw. in einem vorbestimmbaren Maß sich verformen, vorzugsweise sich kontinuierlich verbiegen, und dabei Energie zur Verformung des Materials der Vertikalstützen 3, 4 abgeführt werden, was für eine gesicherte Person in einer dazugehörigen Fahrzeugsitz unkritisch ist, da die oberen Endabschnitte der Vertikalstützen 3, 4 in Richtung D nach vorne nur etwas verbogen werden (s. Fig. 4). Damit wird im Belastungsfall am Gurtgestell 1, 26 wirkende Energie abgeführt bzw. in Verformungs- und Reibungswärme umgewandelt, so dass sichergestellt wird, dass das Gurtgestell 1, 26 durch eine vorgebbare Deformation durch plastische Verformung nicht aus dem Bodenbereich des Fahrzeugs herausgerissen wird, was unerwünschte bzw. kritische Schadensfolgen für die gesicherte Person mit sich bringen würde. Ein Herausreißen des Gurtgestells könnte bei nicht geschlitztem Gurtgestell bzw. bei nicht geschlitzten Vertikalstützen 3, 4 mit höherer Wahrscheinlichkeit stattfinden bzw. würde bereits bei einer am Gurtgestell vergleichsweise geringeren wirkenden Energie stattfinden, bei welcher das erfindungsgemäße geschlitzte Gurtgestell 1, 26 sich lediglich kontrolliert verformen würde.

Zur kontrollierten vorgebbaren Verformung der Vertikalstützen 3, 4 und/oder der Querstrebe 5 bestehen diese aus einem geeigneten Material zum Beispiel aus einem plastisch vorteilhaft verformbaren Stahlmaterial.

Zur gezielten Vorgabe der Verformung des Gurtgestells 1, 26 im Belastungsfall kann unter anderem die Anzahl der Schlitze und/oder können die Abstände zwischen zwei benachbarten Schlitzen entsprechend gewählt werden.

Die Abstände zwischen den Schlitzen 14 bis 19 an der Vertikalstütze 3 und die Abstände zwischen den Schlitzen 20 bis 25 an der Vertikalstütze 4 ist identisch. Demgemäß ist von einem oberen Ende der Vertikalstütze 3 bzw. 4 der erste Schlitz 14 und der zweite Schlitz 15 mit einem geringeren Abstand in Längsrichtung der Vertikalstützen 3, 4 versehen, als die jeweiligen Abstände zwischen den anderen Schlitzen 15 bis 19 bzw. 21 bis 25.

Figur 3 zeigt eine alternative erfindungsgemäße Vorrichtung, welche als Gurtgestell 26 ausgebildet ist. Das Gurtgestell 26 ist gegenüber dem Gurtgestell 1 erweitert und umfasst eine zum Gurtgestell 1 identisch ausgebildete Struktur und zusätzlich eine weitere Struktur, die eine Auslegerstütze 27 umfasst, womit das Gurtgestell 26 gegenüber dem Gurtgestell 1 mechanisch noch stabiler ausgebildet und flexibler bzw. universeller einsetzbar ist.

Die mit der Querstrebe 5 verbindbare Auslegerstütze 27 weist an ihrem oberen Ende ein U-förmiges Verbindungsblech 28 auf, das im mittleren Bereich der Querstrebe 5 diese vorne, oben und unten umgreift, um die Auslegerstütze 27 mit der Querstrebe 5 zu verbinden. Vom Verbindungsblech 28 erstreckt sich ein räumlich schräg ausgerichteter erster Abschnitt 29 bis zu einem Winkelbereich 30, an den sich ein vertikaler Fußabschnitt 31 mit einer endseitigen Fußplatte 32 anschließt, der mit dem Bodenbereich eines Fahrzeuges verbindbar ist.

Die Auslegerstütze 27 umfasst eine Grundstruktur, die wahlweise bzw. vorzugsweise aus einem Mehrfach-Hohlprofilelement 33 gebildet ist, welches vorzugsweise zwei Hohlkörper 33a und 33b umfasst. Die Hohlkörper 33a und 33b sind vorzugsweise identisch zum Beispiel entsprechend der im Querschnitt rechteckigen Hohlkörpern 6a, 6b aufgebaut, allerdings mit einem abgewinkelten Verlauf mit dem oberen längeren geraden Abschnitt 29 und dem kürzeren geraden Fußabschnitt 31.

Außerdem ist im Winkelbereich 30 außen an der Auslegerstütze 27 ein Verstärkungselement 34 vorgesehen.

Das Fußelement 9 ist über Öffnungen 9a an einem Fahrzeugboden fixierbar.

### Bezugszeichenliste:

- 1: Gurtgestell
- 2: Stützanordnung
- 3: Vertikalstütze
- 4: Vertikalstütze
- 5: Querstrebe
- 5a: Befestigungsabschnitt
- 6: Mehrfach-Hohlprofilelement
- 6a: Hohlkörper
- 6b: Hohlkörper
- 6c: Hohlkörper
- 7: Mehrfach-Hohlprofilelement
- 7a: Hohlkörper
- 7b: Hohlkörper
- 8: Mehrfach-Hohlprofilelement
- 8a: Hohlkörper
- 8b: Hohlkörper
- 9: Fußelement
- 9a: Öffnung
- 10: Verbindungsblech
- 11: Strebe
- 12: Schlitzung
- 13: Schlitzung
- 14-19: Schlitz
- 20-25: Schlitz
- 26: Gurtgestell
- 27: Auslegerstütze
- 28: Verbindungsblech
- 29: Abschnitt
- 30: Winkelbereich
- 31: Fußabschnitt
- 32: Fußplatte
- 33: Mehrfach-Hohlprofilelement
- 33a: Hohlkörper
- 33b: Hohlkörper
- 34: Verstärkungselement
- 35: Mehrfach-Hohlprofilelement

## Patentansprüche

1. Vorrichtung (1, 26) zur Anordnung eines Personenrückhaltesystems in einem Verkehrsmittel, um mit dem Personenrückhaltesystem eine in dem Verkehrsmittel sitzende Person zu sichern, wobei die Vorrichtung (1, 26) eine Stützanordnung (2) mit einer Vertikalstütze (3, 4) umfasst, die in einem Bodenbereich des Verkehrsmittels aufrecht stehend fixierbar ist, und wobei an der Vertikalstütze (3, 4) eine längliche Querstrebe (5) aufgenommen ist, die winklig zur Vertikalstütze (3, 4) ausgerichtet ist, **dadurch gekennzeichnet, dass** die Vertikalstütze (3, 4) und/oder die Querstrebe (5) als Mehrfach-Hohlprofilelement (6, 7, 8) aufgebaut sind, wobei das Mehrfach-Hohlprofilelement (6, 7, 8) über seine zumindest wesentliche Erstreckung zwei benachbarte an den Außenseiten miteinander längsseitig verbundene Hohlkörper (6a, 6b; 7a, 7b; 8a, 8b) umfasst.

2. Vorrichtung nach Anspruch 1, **dadurch gekennzeichnet, dass** das Mehrfach-Hohlprofilelement (6, 7, 8) aus zumindest zwei gleichartigen Hohlkörpern zusammengebaut ist.

3. Vorrichtung nach einem der vorhergehenden Ansprüche, **dadurch gekennzeichnet, dass** der Hohlkörper erste gegenüberliegende Hohlkörperwandungen und zweite gegenüberliegende Hohlkörperwandungen aufweist.

4. Vorrichtung nach einem der vorhergehenden Ansprüche, **dadurch gekennzeichnet, dass** die Vertikalstütze (3, 4) und/oder die Querstrebe in Längsrichtung betrachtet innerhalb eines Endabschnitts der Vertikalstütze (3, 4) und/oder der Querstrebe mit einer Materialausnehmung (14-25) in einer Wand der Vertikalstütze (3, 4) und/oder der Querstrebe (5) versehen vorzugsweise geschlitzt ausgebildet ist.

5. Vorrichtung nach einem der vorhergehenden Ansprüche, **dadurch gekennzeichnet, dass** das Mehrfach-Hohlprofilelement (6, 7, 8) in Längsrichtung des Mehrfach-Hohlprofilelements (6, 7, 8) betrachtet innerhalb eines Endabschnitts des Mehrfach-Hohlprofilelements (6, 7, 8) geschlitzt ausgebildet ist, wobei der geschlitzte Endabschnitt des Mehrfach-Hohlprofilelements (6, 7, 8) eine Länge zwischen 20 und 40 Prozent der Gesamtlänge des Mehrfach-Hohlprofilelements (6, 7, 8) ausmacht.

6. Vorrichtung nach einem der vorhergehenden Ansprüche, **dadurch gekennzeichnet, dass** das geschlitzte Mehrfach-Hohlprofilelement (6, 7, 8) in einem Endabschnitt mehrere materialfreie Einschnitte (14-25) aufweist.

7. Vorrichtung nach einem der vorhergehenden Ansprüche, **dadurch gekennzeichnet, dass** eine Abmessung eines durch eine Schlitzung (12, 13) im Mehrfach-Hohlprofilelement (6, 7, 8) gebildeten materialfreien Bereichs vorgebbar abgestimmt ist auf ein Verformungsverhalten des Mehrfach-Hohlprofilelements (6, 7, 8) bei einer mechanischen Belastung.

8. Vorrichtung nach einem der vorhergehenden Ansprüche, **dadurch gekennzeichnet, dass** eine Abmessung des durch die Schlitzung (12, 13) im Mehrfach-Hohlprofilelement (6, 7, 8) gebildeten materialfreien Bereichs eine Länge, eine Breite und/oder eine Tiefe des materialfreien Bereichs ist.

9. Vorrichtung nach einem der vorhergehenden Ansprüche, **dadurch gekennzeichnet, dass** ein Abstand zwischen zwei durch jeweils einen Schlitz (14-25) im Mehrfach-Hohlprofilelement (6, 7,8) gebildeten materialfreien Bereichs vorgebbar abgestimmt ist auf ein Verformungsverhalten des Mehrfach-Hohlprofilelements (6, 7,8) bei einer mechanischen Belastung.

10. Vorrichtung nach einem der vorhergehenden Ansprüche, **dadurch gekennzeichnet, dass** eine Auslegerstütze (27) vorhanden ist, welche mit der Vertikalstütze (3, 4) und/oder der Querstrebe (5) verbunden ist und ein Fußabschnitt (32) der Auslegerstütze (27) im Bodenbereich des Verkehrsmittels abstützbar ist, wobei die Auslegerstütze (27) ein Mehrfach-Hohlprofilelement (33) umfasst, welches zwei längsseitig verbundene Hohlkörper (33a, 33b) umfasst.

11. Personensitzanordnung für ein Verkehrsmittel mit einer Vorrichtung (1, 26) nach einem der Ansprüche 1 bis 10.

12. Verkehrsmittel mit einer Personensitzanordnung nach Anspruch 11 oder mit einer Vorrichtung (1, 26) nach einem der Ansprüche 1 bis 10.

## Claims

1. Device (1, 26) for arranging a passenger restraint system in a means of transport for securing a person sitting in the means of transport with the passenger restraint system, wherein the device (1, 26) comprises a support arrangement (2) with a vertical support (3, 4) which can be fixed upright in a base area of the means of transport and wherein on the vertical support (3, 4) an elongated cross member (5) is mounted which is aligned at an angle to the vertical support (3, 4), **characterised in that** the vertical support (3, 4) and/or the cross member (5) are constructed as multiple hollow profile element (6, 7, 8), wherein the multiple hollow profile element (6, 7, 8) comprises at least over its major extension two adjacent hollow bodies (6a, 6b; 7a, 7b; 8a, 8b) connected to one another on the longitudinal side.

2. Device according to claim 1, **characterised in that** the multiple hollow profile element (6, 7, 8) is assembled from at least two similar hollow bodies.

3. Device according to any of the preceding claims, **characterised in that** the hollow body has first opposite hollow body walls and second opposite hollow body walls.

4. Device according to any of the preceding claims, **characterised in that** the vertical support (3, 4) and/or the cross member as viewed in longitudinal direction within an end section of the vertical support (3, 4) and/or the cross member is provided with a material recess (14-25) in a wall of the vertical support (3, 4) and/or the cross member (5), preferably provided with a slot.

5. Device according to any of the preceding claims, **characterised in that** the multiple hollow profile element (6, 7, 8) as viewed in longitudinal direction of the multiple hollow profile element (6, 7, 8) is designed to be slotted inside an end section of the multiple hollow profile element (6, 7, 8), wherein the slotted end section of the multiple hollow profile element (6, 7, 8) forms a length between 20 and 40 percent of the total length of the multiple hollow profile element (6, 7, 8).

6. Device according to any of the preceding claims, **characterised in that** the slotted multiple hollow profile element (6, 7, 8) in an end section has a plurality of material-free recesses (14-25).

7. Device according to any of the preceding claims, **characterised in that** a dimension of a material-free area formed by a slot (12, 13) in the multiple hollow profile element (6, 7, 8) is matched in a defined manner to a deformation behaviour of the multiple hollow profile element (6, 7, 8) in case of mechanical loading.

8. Device according to any of the preceding claims, **characterised in that** a dimension of the material-free area formed by the slot (12, 13) in the multiple hollow profile element (6, 7, 8) is a length, a width and/or a depth of the material-free area.

9. Device according to any of the preceding claims, **characterised in that** a distance between two material-free areas formed respectively by a slot (14-25) in the multiple hollow profile element (6, 7, 8) is matched in a defined manner to a deformation behaviour of the multiple-hollow profile element (6, 7, 8) in case of mechanical loading.

10. Device according to any of the preceding claims, **characterised in that** an extension arm support (27) is provided which is connected to the vertical support (3, 4) and/or the cross member (5) and a foot section (32) of the extension arm support (27) can be supported in the base area of the means of transport, wherein the extension arm support (27) comprises a multiple hollow profile element (33) which comprises two hollow bodies (33a, 33b) connected on the longitudinal side.

11. Passenger seat arrangement for a means of transport with a device (1, 26) according to any of claims 1 to 10.

12. Means of transport with a passenger seat arrangement according to claim 11 or with a device (1, 26) according to any of claims 1 to 10.

## Revendications

1. Dispositif (1, 26) pour le montage d'un système de retenue de passagers dans un moyen de transport afin de sécuriser une personne assise dans le moyen de transport avec le système de retenue de passager, le dispositif (1, 26) comprenant un dispositif support (2) avec un support vertical (3, 4) qui peut être fixé dressé verticalement dans une zone de plancher du moyen de transport, et une entretoise allongée (5) étant reçue sur le support vertical (3, 4) en étant orientée en faisant un angle par rapport au support vertical (3, 4), **caractérisé en ce que** le support vertical (3, 4) et/ou l'entretoise (5) sont réalisés sous la forme d'un élément à profilés creux multiples (6, 7, 8), l'élément à profilés creux multiples (6, 7, 8) comprenant sur au moins sensiblement son extension deux corps creux (6a, 6b; 7a, 7b ; 8a, 8b) voisins, reliés entre eux longitudinalement sur les côtés extérieurs.

2. Dispositif selon la revendication 1, **caractérisé en ce que** l'élément à profilés creux multiples (6, 7, 8) est constitué d'au moins deux corps creux du même type.

3. Dispositif selon l'une des revendications précédentes, **caractérisé en ce que** le corps creux est muni de premières parois de corps creux opposées et de secondes parois de corps creux opposées.

4. Dispositif selon l'une des revendications précédentes, **caractérisé en ce que** dans une partie d'extrémité du support vertical (3, 4) et/ou de l'entretoise, considérée dans la direction longitudinale, le support vertical (3, 4) et/ou l'entretoise est conçu muni d'un évidement de matière (14-25) dans une paroi du support vertical (3, 4) et/ou de l'entretoise transversale (5), et est de préférence fendu.

5. Dispositif selon l'une des revendications précédentes, **caractérisé en ce que** l'élément à profilés creux multiples (6, 7, 8) est conçu fendu dans une partie d'extrémité de l'élément à profilés creux multiples (6, 7, 8), considérée dans la direction longitudinale de l'élément à profilés creux multiples (6, 7, 8), la partie d'extrémité fendue de l'élément à profilés creux multiples (6, 7, 8) représentant une longueur comprise entre 20 et 40 % de la longueur totale de l'élément à profilés creux multiples (6, 7, 8).

6. Dispositif selon l'une des revendications précédentes, **caractérisé en ce que** l'élément à profilés creux multiples fendu (6, 7, 8) est muni dans une partie d'extrémité de plusieurs incisions (14-25) exemptes de matière.

7. Dispositif selon l'une des revendications précédentes, **caractérisé en ce qu'**une dimension d'une zone exempte de matière formée par une fente (12, 13) dans l'élément à profilés creux multiples (6, 7, 8) est adaptée de manière prédéfinissable à un comportement de déformation de l'élément à profilés creux multiples (6, 7, 8) sous l'effet d'une sollicitation mécanique.

8. Dispositif selon l'une des revendications précédentes, **caractérisé en ce qu'**une dimension de la zone exempte de matière formée par la fente (12, 13) dans l'élément à profilés creux multiples (6, 7, 8) est une longueur, une largeur et/ou une profondeur de la zone exempte de matière.

9. Dispositif selon l'une des revendications précédentes, **caractérisé en ce qu'**une distance entre deux zones exemptes de matière, formées chacune par une fente (14-25) dans l'élément à profilés creux multiples (6, 7, 8), est adaptée de manière prédéfinisable à un comportement de déformation de l'élément à profilés creux multiples (6, 7, 8) sous l'effet d'une sollicitation mécanique.

10. Dispositif selon l'une des revendications précédentes, **caractérisé en ce qu'**il est prévu un bras d'appui (27) qui est relié au support vertical (3, 4) et/ou à l'entretoise (5), et **en ce qu'**une section de pied (32) du bras d'appui (27) peut être en appui dans la zone de plancher du moyen de transport, le bras d'appui (27) comprenant un élément à profilés creux multiples (33) qui comprend deux corps creux (33a, 33b) reliés longitudinalement.

11. Agencement de siège de passager pour un moyen de transport avec un dispositif (1, 26) selon l'une des revendications 1 à 10.

12. Moyens de transport avec un agencement de siège de passagers selon la revendication 11 ou avec un dispositif (1, 26) selon l'une des revendications 1 à 10.
